# EUROPEAN PATENT SPECIFICATION

(11) **EP 4 353 072 B1**
(45) Date of publication and mention of the grant of the patent: **03.12.2025**
(21) Application number: 23203646.7
(22) Date of filing: 13.10.2023
(51) Int. Cl.: A01D 41/14, A01D 45/02

(54) **COMPUTER VISION SYSTEMS AND METHODS FOR AN AGRICULTURAL HEADER**
COMPUTERSICHTSYSTEME UND VERFAHREN FÜR EINEN LANDWIRTSCHAFTLICHEN ERNTEVORSATZ
SYSTÈMES ET PROCÉDÉS DE VISION ARTIFICIELLE POUR TÊTE DE COUPE AGRICOLE

(30) Priority: 14.10.2022 US 202263416023 P
(43) Date of publication of application: 17.04.2024
(73) Proprietor: CNH Industrial America LLC, New Holland, PA 17557 (US)
(72) Inventor: HUNT, Cory Douglas, New Holland, 17557 (US); MARTIN, Jethro, New Holland, 17557 (US)
(74) Representative: CNH Industrial IP Department

(56) References cited:
- US-A1- 2020 267 899
- US-A1- 2022 232 770

## Description

### BACKGROUND

The present disclosure generally relates to impact sensing on an agricultural header, and more particularly, to computer vision systems and methods that determine a location of initial contact between a crop and an agricultural header.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. In particular, the corn header may include row units that include components that operate to separate ears of corn from stalks as the harvester travel through a field. Conveyors (e.g., augers) carry the ears of corn toward processing machinery and/or storage compartments of the harvester, while the stalks are deposited back into the field.

Document US 2020/267899 A1 discloses a detection system for a header of an agricultural system according to the preamble of claim 1.

### BRIEF DESCRIPTION

The present invention is defined by the appended claims.

In an examplary embodiment, an impact detection system for a header of an agricultural system includes a first camera coupled to the agricultural system and configured to capture imagery of at least one row unit of the header. The impact detection system also includes a controller configured to utilize computer vision techniques to identify a portion of a crop in the imagery and to determine a location of initial contact of the portion of the crop at the header based on the imagery.

In an examplary embodiment, a header for an agricultural system includes multiple row units distributed across a width of the header. The header also includes a first camera coupled to the header and configured to capture imagery of at least one row unit of the multiple row units. The header also includes a controller configured to identify a portion of a crop in the imagery and to determine a location of initial contact of the portion of the crop at the header based on the imagery.

In an examplary embodiment, a method includes operating a header to harvest multiple crops as the header travels through a field. The method also includes generating, via a first camera, imagery of at least one row unit of the header. The method further includes processing, via one or more processors, the imagery to identify a respective portion of each crop of the multiple crops received at the at least one row unit of the header. The method further includes processing, via the one or more processors, the imagery to determine a respective location of initial contact between the respective portion of each crop of the multiple crops received at the at least one row unit of the header and deck plates of the header.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural system, in accordance with an embodiment of the present disclosure;
FIG. 2 is a perspective side view of a header that may be employed within the agricultural system of FIG. 1, in accordance with an embodiment of the present disclosure;
FIG. 3 is a top view of the header of FIG. 2, in accordance with an embodiment of the present disclosure;
FIG. 4 is a perspective front view of a portion of the header of FIG. 2, in accordance with an embodiment of the present disclosure;
FIG. 5 is a perspective side view of a hood that may be employed within the header of FIG. 2, in accordance with an embodiment of the present disclosure; and
FIG. 6 is a flowchart of a method for determining an impact location on a header, such as the header of FIG. 2, in accordance with an aspect of the present disclosure.

### DETAILED DESCRIPTION

One or more specific embodiments of the present disclosure will be described below. In an effort to provide a concise description of these embodiments, all features of an actual implementation may not be described in the specification

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is designed to efficiently harvest corn within the field. The corn header may include multiple row units across a width of the corn header, each row unit may include deck plates, stalk rollers, and/or other components that operate to separate ears of corn from stalks as the harvester travel through the field. Conveyors (e.g., augers) carry the ears of corn toward processing machinery and/or storage compartments of the harvester, while the stalks are deposited back into the field.

It is presently recognized that it is desirable to determine a location (e.g., an impact location) of initial contact between the ears of corn and the deck plates relative to a longitudinal axis of the header. Generally, for good harvesting performance, the ears of corn should make initial contact with the deck plates toward a forward portion of the deck plates relative to the longitudinal axis of the header (e.g., a forward half; forward of a midpoint of the deck plates along the longitudinal axis). This may enable the stalks to be completely discharged from the header before reaching a rear portion of the deck plates, thereby reducing a likelihood of the stalks being fed into the processing machinery and/or storage compartments of the harvester (and thus, reducing an amount of material other than grain [MOG] among the ears of corn).

Accordingly, present embodiments relate generally to an impact detection system. The impact detection system may include one or more imaging devices (e.g., cameras) positioned on the header and/or other suitable location of the agricultural system, such as a cab of the agricultural system. The one or more imaging devices are configured to capture or generate images (e.g., imagery; image data) of the ears of corn striking the deck plates. The impact detection system may utilize computer vision techniques to analyze the images to determine the location of the initial contact between the ears of corn and the deck plates.

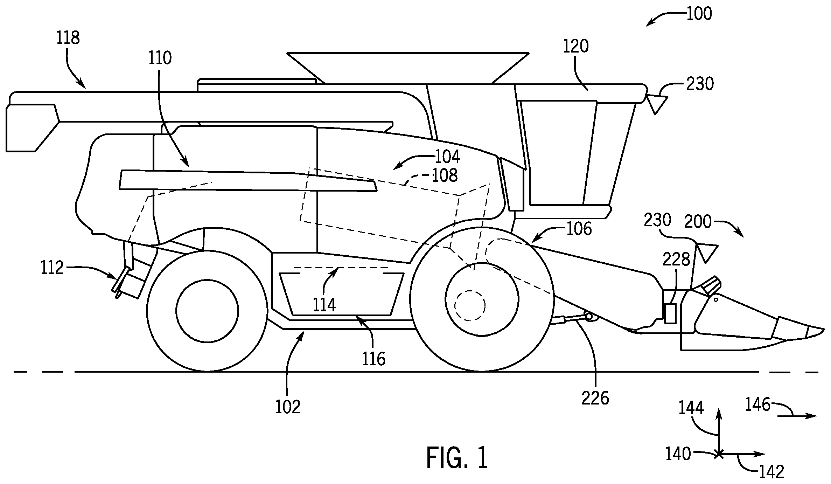

With the foregoing in mind, FIG. 1 is a side view of an embodiment of an agricultural system 100, which may be a harvester. The agricultural system 100 includes a chassis 102 configured to support a header 200 (e.g., a corn header) and an agricultural crop processing system 104. The header 200 is configured to separate a portion of crops (e.g., corn) and to transport the portion of the crops (e.g., ears of corn) toward an inlet 106 of the agricultural crop processing system 104 for further processing of the portion of the crops. The header 200 may also return other portions of the crops (e.g., material other than grain [MOG], such as stalks) to a field.

The agricultural crop processing system 104 receives the portion of the crops from the header 200 and separates desired crop material from crop residue. For example, the agricultural crop processing system 104 may include a thresher 108 having a cylindrical threshing rotor that transports the portion of the crops in a helical flow path through the agricultural system 100. In addition to transporting the portion of the crops, the thresher 108 may separate the desired crop material (e.g., grain) from the crop residue (e.g., husks), and may enable the desired crop material to flow into a cleaning system 114 (e.g., sieves) located beneath the thresher 108. The cleaning system 114 may remove debris from the desired crop material and transport the desired crop material to a storage tank 116 within the agricultural system 100. When the storage tank 116 is full, a tractor with a trailer may pull alongside the agricultural system 100. The desired crop material collected in the storage tank 116 may be carried up by an elevator and dumped out of an unloader 118 into the trailer. The crop residue may be transported from the thresher 108 to a crop residue handling system 110, which may process (e.g., chop/shred) and remove the crop residue from the agricultural system 100 via a crop residue spreading system 112 positioned at an aft end of the agricultural system 100. To facilitate discussion, the header 200 may be described with reference to a lateral axis or direction 140, a longitudinal axis or direction 142, and a vertical axis or direction 144. The agricultural system 100 and/or its components may also be described with reference to a direction of travel 146.

In the illustrated embodiment, the agricultural system 100 may include one or more actuators configured to manipulate the spatial orientation and/or position of the header 200 with respect to the chassis 102, and/or the spatial orientation of the header 200 with respect to the crop rows/ground/soil. A header height actuator 226 may drive the header 200 to move along the direction 144 relative to the ground. The header 200 may be attached to the chassis 102 via a four bar linkage. The position of the four bar linkage may be manipulated by the header height actuator 226 to adjust the height of the header 200. The agricultural system 100 may also include a header orientation actuator 228. The header orientation actuator 228 may be configured to rotate the angular orientation of the header 200 (e.g., the entire header 200 or a portion thereof) relative to the ground. The actuators may be manipulated to adjust the agricultural system 100 based on one or more variables (e.g., impact location; environmental variables, such as soil condition, terrain, crop damage, and/or crop height).

As discussed herein, an impact detection system may include one or more imaging devices 230 (e.g., cameras) on the header 200 and/or other suitable location, such as on a cab 120 (e.g., a cab portion) of the agricultural system 100. The one or more imaging devices 230 may be positioned to capture or generate images (e.g., imagery; image data) of the header 200, and more particularly, images of the crop (e.g., ears of corn) striking certain portions (e.g., deck plates) of the header 200. A controller (e.g., electronic controller) may process the images using computer vision techniques to determine a location (e.g., impact location) of initial contact between the crop and the header 200 relative to the longitudinal axis 142 of the header 200. In some embodiments, the actuators and/or other components of the header 200 may be manipulated based on the location of the initial contact.

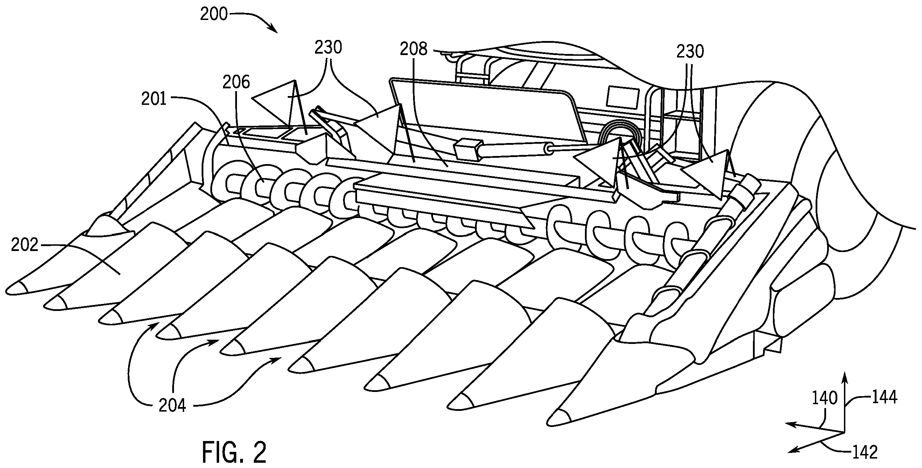

FIG. 2 is a perspective view of an embodiment of the header 200 that may be employed within the agricultural system 100 of FIG. 1. In the illustrated embodiment, the header 200 is a corn header and includes multiple dividers 202 configured to separate rows of a crop (e.g., corn). The dividers 202 may be distributed across a width of the header 200 (e.g., along the lateral axis 140). As the header 200 moves along a path, the dividers 202 may direct the crops from each row to one or more row units 204. The row units 204 are configured to pick a portion of each crop from a stalk or each crop, thereby separating the portion of each crop from the stalk of each crop. The portion of the crop may be directed toward one of a pair of conveyors 206 (e.g., augers) configured to convey the portion of the crop laterally inward to a center crop conveyor 208 at a center of the header 200, and the center crop conveyor 208 directs the portion of the crop toward the inlet of the agricultural crop processing system. As illustrated, the conveyors 206 extend along a substantial portion of the width of the header 200 (e.g., along the lateral axis 140). The conveyors 206 may be driven by a drive mechanism (e.g., electric motor, hydraulic motor). The row units 204 may also return other portions of the crops (e.g., MOG, such as stalks) to the field.

The header 200 may include or be coupled to the one or more imaging devices 230. For example, the one or more imaging devices 230 may be mounted to a frame 201 of the header 200. In FIG. 2, the header 200 includes or is coupled to four imaging devices 230 that are distributed (e.g., spaced apart) across the width of the header 200. However, it should be appreciated that the header 200 may include or be coupled to any number of imaging devices 230 (e.g., 1, 2, 3, 4, 5, 6, 7, 8, 9, 10, 11, 12, or more). In some embodiments, the header 200 may include one imaging device 230 per row unit 204 (e.g., one imaging device 230 aligned with one respective row unit 204). In some embodiments, the header 200 may include one imaging device 230 per group of row units 204 (e.g., one imaging device 230 for 2, 3, 4, 5, 6, or more row units 204). It should be appreciated that each imaging device 230 may be positioned and configured to capture images of one particular row unit 204 or one particular group of row units 204. For example, with one imaging device 230 per row unit 204, each imaging device 230 may capture images of one particular row unit 204 (in this case, each image may include only one particular row unit 204) or one particular group of row units 204 (in this case, each row unit 204 may be included in multiple images). Similarly, with one imaging device 230 per group of row units 204, each imaging device 230 may capture images of one particular row unit 204 (in this case, some row units 204 may not be included in the images, instead the images from other row units 204 may be considered representative) or one particular group of row units 204 (in this case, a field of view may be wide enough to capture more than one row unit 204).

As noted herein, the one or more imaging devices 230 may be provided on the cab of the agricultural system. In some such cases, the one or more imaging devices 230 may include a single imaging device 230 that captures images of an entire width of the header 200 (e.g., all row units of the header 200) or a portion of the width of the header 200 (e.g., 1, 2, 3, 4, or some other subset of all row units 204 of the header 200). In some such cases, the one or more imaging devices 230 may include multiple imaging devices 230 that capture images of respective portions of the header 200 (e.g., one imaging device 230 captures all or some row units 204 on a left side of the header 200, and another imaging device 230 captures images of all or some row units 204 on a right side of the header 200). In some embodiments, the one or more image devices 230 may be adjustable, such as rotatable relative to the header 200 to capture images of multiple row units over time (e.g., one or more row units 204 over a first time period, then one or more other row units 204 over a second time period, and so forth). It should be appreciated that these are merely examples to facilitate discussion and the one or more imaging devices 230 may be positioned in any of a variety of ways to carry out the disclosed techniques.

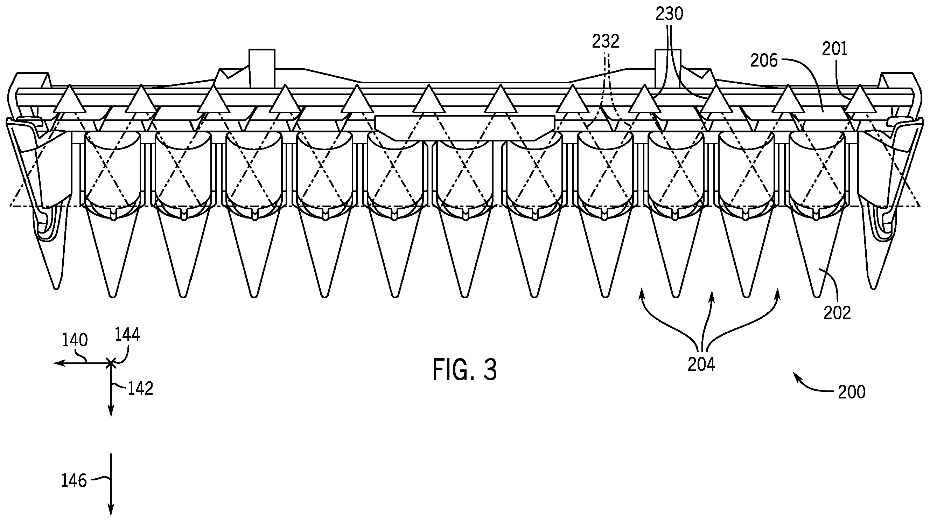

FIG. 3 is a top view of an embodiment of the header 200 that may be employed within the agricultural system 100 of FIG. 1. The header 200 is a corn header and includes the multiple dividers 202, the row units 204, the conveyors 206, and the one or more imaging devices 230. For example, the one or more imaging devices 230 may be mounted to the frame 201 of the header 200. In FIG. 3, the header 200 includes or is coupled to 12 imaging devices 230 that are distributed (e.g., spaced apart) across the width of the header 200 with one imaging device 230 per row unit 204 (e.g., one imaging device 230 aligned with one respective row unit 204). Additionally, in FIG. 3, each imaging device 230 captures images of one particular row unit 204. In particular, each imaging device 230 has a respective field of view 232 that includes or covers one particular row unit 204 (e.g., only one particular row unit 204; a respective midline of one hood 218 to a respective midline of an adjacent hood 218). Each imaging device 230 may also be configured (e.g., via setting an aperture of the imaging device 230) to have the respective field of view 232 with a limited depth that corresponds to a length of the particular row unit 204 along the longitudinal axis 142 (e.g., generate images with a limited depth of field; objects forward of the particular row unit 204 or forward of a particular portion, such as deck plates and/or a hood, of the particular row unit 204 are blurry or out of focus).

As noted herein, it should be appreciated that the header 200 may include or be coupled to any number of imaging devices 230 (e.g., 1, 2, 3, 4, 5, 6, 7, 8, 9, 10, 11, 12, or more). Further, in some embodiments, the header 200 may include one imaging device 230 per group of row units 204 (e.g., one imaging device 230 for 2, 3, 4, 5, 6, or more row units 204). It should be appreciated that each imaging device 230 may be positioned and configured to capture images of one particular row unit 204 or one particular group of row units 204. For example, with one imaging device 230 per row unit 204, each imaging device 230 may capture images of one particular group of row units 204 (in this case, each row unit 204 may be included in multiple images). Similarly, with one imaging device 230 per group of row units 204, each imaging device 230 may capture images of one particular row unit 204 (in this case, some row units 204 may not be included in the images, instead the images from other row units 204 may be considered representative) or one particular group of row units 204 (in this case, a field of view may be wide enough to capture more than one row unit 204).

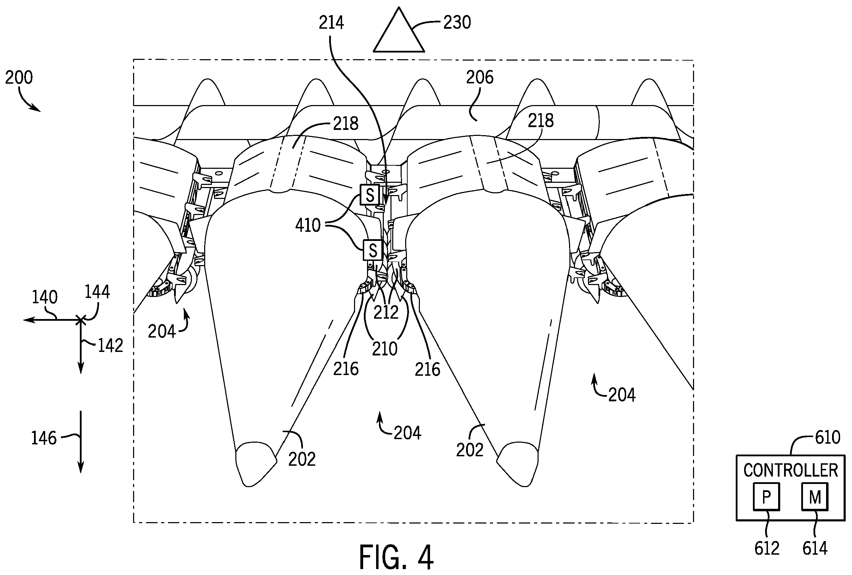

FIG. 4 is a perspective front view of an embodiment of a portion of the header 200. As shown, the portion of the header 200 includes the dividers 202 that direct the crops to one or more row units 204. Each row unit 204 includes various components that operate to separate desired crop material (e.g., the ears of corn) from the stalks, carry the desired crop material toward the conveyors 206, and return the stalks to the field. For example, each row unit 204 may include a pair of stalk rollers 210 that are configured to grip the stalks and rotate in opposite directions to push the stalks toward the field (e.g., vertically downward; below the header 200). Each row unit 204 also includes a pair of deck plates 212 that are positioned over the pair of stalk rollers 210. Each deck plate 212 extends from a first end to a second end along the longitudinal axis 142, and the pair of deck plates 212 are separated from one another along the lateral axis 140 to define a gap 214. Further, each row unit 204 may include a pair of chains 216 (e.g., with lugs) that are configured to drive or push the desired crop material along the pair of deck plates 212 toward the conveyors 206. The pair of deck plates 212 are spaced apart so that the gap 214 is sized to enable the stalks to pass through the gap 214, but to block the desired crop material from passing through the gap 214. Thus, the pair of stalk rollers 210 and the pair of deck plates 212 operate to separate the desired crop material from the stalks (e.g., the pair of stalk rollers 210 direct the stalks toward the field, while the desired crop material is blocked from falling through the gap 214 between the pair of deck plates 212). The pair of deck plates 212 may be adjustable and may be driven (e.g., via an actuator) toward and away from one another along the lateral axis 140 to change a size of the gap 214 (e.g., a width of the gap 214 along the lateral axis 140). A hood 218 is positioned rearward of each separator 202 and between adjacent row units 204 to cover various components, such as the actuator that drives the pair of deck plates 212, linkages, sensors, and so forth.

As noted herein, for good harvesting performance, the crop (e.g., the desired crop material; the portion of the crop; ears of corn) should make initial contact with the pair of deck plates 212 toward a forward portion of the pair of deck plates 212 relative to the longitudinal axis 142 or the forward direction of travel 146 of the header 200 (e.g., a forward half; forward of a midpoint of the pair of deck plates 212 along the longitudinal axis 142; a target impact region). This may enable the stalks to be completely discharged from the header 200 before reaching a rear portion of the pair of deck plates 212, thereby reducing a likelihood of the stalks being fed into the conveyors 206. Accordingly, the impact detection system may include the one or more imaging devices 230 (e.g., cameras) on the header 200 and/or other suitable location, and the impact detection system may also include a controller 610 (e.g., electronic controller) that is configured to receive and analyze images captured or generated by the one or more imaging devices 230 to determine the location of the initial contact between the crop and the pair of deck plates 212 (e.g., along a length of the pair of deck plates 212; between the first end and the second end of the pair of deck plates 212).

In some embodiments, the controller 610 may utilize computer vision techniques to analyze the images. The controller 610 may utilize artificial intelligence (AI) or machine learning (e.g., machine learning algorithms) to identify the crop (e.g., the ears of corn) and the location of the initial contact of the crop relative to the header 200. In some embodiments, the controller 610 may utilize a trained neural network to assess the images to identify the crop and the location at which the crop strikes the header 200 (e.g., the pair of deck plates 212 of the header 200). For example, the trained neural network may be configured to identify the desirable crop material in the images (e.g., based on object recognition; trained on model and/or historical images to identify visible characteristics that indicate the desirable crop material), identify that the desirable crop material is in contact with the header 200 (e.g., via analysis of one or more image frames that show the desirable crop material in contact with the header 200), identify the location of the desirable crop material relative to the header 200 when the desirable crop material makes the initial contact with the header 200 (e.g., based on a known relationship between pixel location in the images and locations on the header 200), and then assign or determine this to be the location of the initial contact between the desirable crop material and the header 200.

In some embodiments, the crop may demonstrate a change in velocity and/or direction at the location of the initial contact with the header 200. For example, the pair of stalk rollers 210 pulls the stalk of the crop down through the gap 214 toward the field such that the desirable crop material that is attached to the stalk of the crop eventually strikes the pair of deck plates 212. This contact causes the desirable crop material to separate from the stalk of the crop so that the desirable crop material can then be transferred toward the conveyors 206. This contact may also cause the desirable crop material to experience a change in velocity and/or direction (e.g., the desirable crop material may stop its movement toward the field and/or rebound away from the pair of deck plates 212). The trained neural network may be configured to identify the desirable crop material in the images, identify that the desirable crop material experiences the change in velocity and/or direction that indicates contact with the header 200 (e.g., via analysis of several image frames captured or generated over time), identify the location of the desirable crop material relative to the header 200 as the desirable crop material experiences the change in velocity and/or direction (and thus, as the desirable crop material makes the initial contact with the header 200; based on a known relationship between pixel location in the images and locations on the header 200), and then assign or determine this to be the location of the initial contact between the desirable crop material and the header 200.

In one embodiment, such as during availability of particular known examples that correlate to future predictions, supervised AI/machine learning may be implemented. In supervised AI/machine learning, the mathematical model of a set of data contains both the inputs and the desired outputs. This data is referred to as "training data" and is essentially a set of training examples. Each training example has one or more inputs and the desired output, also known as a supervisory signal. In the mathematical model, each training example is represented by an array or vector, sometimes called a feature vector, and the training data is represented by a matrix. Through iterative optimization of an objective function, supervised learning algorithms learn a function that can be used to predict the output associated with new inputs. An optimal function will allow the algorithm to correctly determine the output for inputs that were not a part of the training data. An algorithm that improves the accuracy of its outputs or predictions over time is said to have learned to perform that task. Supervised learning algorithms include classification and regression. Classification algorithms are used when the outputs are restricted to a limited set of values, and regression algorithms are used when the outputs may have any numerical value within a range. Further, similarity learning is an area of supervised machine learning closely related to regression and classification, but the goal is to learn from examples using a similarity function that determines the extent in which two objects are similar or related.

Additionally and/or alternatively, in some situations, it may be beneficial to utilize unsupervised learning (e.g., when particular output types are not known). Unsupervised learning algorithms take a set of data that contains only inputs and find structure in the data, such as grouping or clustering of data points. The algorithms, therefore, learn from test data that has not been labeled, classified, or categorized. Instead of responding to feedback, unsupervised learning algorithms identify commonalities in the data and react based on the presence or absence of such commonalities in each new piece of data. In any case, AI/machine learning may be used to identify the desirable crop material, as well as to determine the location of the initial contact between the desirable crop material and the header 200. In some embodiment, AI/machine learning may also be used to determine appropriate outputs to respond to the location of the initial contact, which may provide dynamic, automated adjustments to the header 200 (e.g., to facilitate impact in the target impact location).

Indeed, the controller 610 may generate any of a variety of appropriate outputs. In some embodiments, the appropriate output may include a visual alarm (e.g., presented via a display screen in the cab of the agricultural system; text message with an explanation and/or a recommended adjustment to the header 200) and/or an audible alarm (e.g., presented via a speaker in the cab of the agricultural system). In some embodiments, the appropriate output may include control signals, such as control signals to the actuators to adjust the position and/or the spatial orientation of the header 200 and/or a rotation rate of the pair of stalk rollers 210. For example, in response to the location of the initial contact being rearward of the target impact region of the pair of deck plates (e.g., for some percentage of the crops over some period of time, such as more than 10, 20, 30, 40, or 50 percent over 10, 20, or 30 seconds), the controller 610 may instruct output of the visual alarm and/or the audible alarm, raise the header 200 relative to the chassis of the agricultural system and the ground, and/or reduce an angle between the header and the ground (e.g., rotate the header relative to the chassis of the agricultural system to lift a front end of the header relative to a rear end of the header). In some embodiments, the controller 610 may provide the control signals to manipulate the actuators based on the location of the initial contact, but also accounting for other operational features (e.g., detected loose or flying kernels, detected stalks at the rear end of the pair of deck plates 212) to essentially optimize (e.g., aim to optimize; increase production rates and/or yield of the crop) the harvesting operations. Further, the controller 610 may provide the control signals in response to the respective locations of a particular number (e.g., a threshold number, such as a threshold number or percentage over a period of time, such as more than 10, 20, 30 percent or more over the period of time) of the respective initial contacts being rearward of the target impact region of the pair of deck plates (or across all of the pairs of deck plates on the header 200). Further, the controller 610 may provide the control signals in response to a combined impact location (e.g., an average or median of the respective locations of the initial contacts over some period of time) being outside of the target impact region. In this way, the controller 610 may provide the alarms and/or the control signals in response to the images indicating undesirable impact locations (e.g., outside of the target impact region), and the control signals are intended to adjust the header 200 to provide or to cause desirable impact locations (e.g., within the target impact region).

In some embodiments, the one or more imaging devices 230 may be used in conjunction with one or more sensors 410 (e.g., knock sensors, vibration sensors). As shown, the one or more sensors 410 include a first sensor positioned in a rearward end portion of a first deck plate of the pair of deck plates 212 and a second sensor positioned in a forward end portion of the first deck plate of the pair of deck plates 212. In such cases, the first sensor and the second sensor may detect vibrations induced by the initial contact between the desirable crop material and the first deck plate of the pair of deck plates 212 and generate respective signals indicative of the vibrations. The controller 610 may be configured to process the respective signals to determine the location of the initial contact between the desirable crop material and the first deck plate of the pair of deck plates 212. For example, the initial contact may cause a first peak with a respective amplitude in a first signal from the first sensor and a second peak with a respective amplitude in a second signal from the second sensor, wherein the respective amplitudes vary based on the location of the initial contact and analysis of a difference in the respective amplitudes indicates the location of the initial contact. In such cases, the images from the one or more imaging devices 230 may be utilized to confirm (e.g., verify) the location of the initial contact determined based on the first signal from the first sensor and the second signal from the second sensor (or vice versa). In this way, the impact detection may utilize two techniques (e.g., analysis of images from the one or more imaging devices 230 and analysis of signals from the one or more sensors 410) to determine the location of the initial contact. Further, in such cases, the controller 610 may compare the location based on the analysis of the images from the one or more imaging devices 230 to the location based on the analysis of the signals from the one or more sensors 410 and provide the appropriate output based on the comparison. For example, if the comparison indicates that the location based on the analysis of the images from the one or more imaging devices 230 corresponds to (e.g., matches; within a threshold range) the location based on the analysis of the signals from the one or more sensors 410, the controller 610 may determine that the location is confirmed and then provide the appropriate output (e.g., alarm and/or control signals). However, if the comparison indicates that the location based on the analysis of the images from the one or more imaging devices 230 does not correspond to (e.g., match; outside of the threshold range) the location based on the analysis of the signals from the one or more sensors 410, the controller 610 may determine that the location is not confirmed and then provide the appropriate output (e.g., alarm; discard data, so as not to count the initial contact/location in calculating the percentage of initial contacts that are outside of the target impact region or in calculating the combined impact location).

In some embodiments, the one or more sensors 410 may provide timing information to facilitate identification of a relevant frame(s) of the images. For example, the one or more sensors 410 may include the first sensor that generates the first signal with a respective peak for each instance of initial contact (e.g., for each crop). The controller 610 may identify a respective time for the respective peak, and then identify the frame(s) of the images for analysis. In some embodiment, occurrence or identification of the respective peak may trigger analysis of the frame(s) of the images for analysis (e.g., captured at a same time or in some range of milliseconds before and/or after the respective peak). This coordination may facilitate the computer vision techniques, such as by reducing processing time and/or processing power (e.g., as analysis includes or focuses on only the relevant frame(s)).

In some embodiments, the one or more sensors 410 may generate the one or more signals that operate as feedback training data to train the AI/machine learning algorithms to identify the initial contact in the one or more images (e.g., the initial contact is shown in the one or more images that are obtained at the time of initial contact indicated by the one or more signals). For example, a single row unit on the header 200 (or a single row unit on a connected network of multiple headers) may include one sensor 410. The signal generated by the one sensor 410 may be utilized as the feedback training data to train the AI/machine learning algorithms to teach the controller 610 to determine the location of the initial contact via analysis of the one or more images (e.g., reinforcement learning). It should be appreciated that the one or more sensors 410 may be positioned in any of a variety of locations on the header 200, such as coupled directly or indirectly to one or both of the pair of deck plates 212, the hood 218, and so forth.

The computer vision techniques may also utilize one or more reference features (e.g., features with fixed position relative to the pair of deck plates 212) of the header 200 to facilitate determining the location of the initial contact based on the images from the one or more imaging devices 230. For example, the AI/machine learning algorithms may be trained to recognize bolts on the header 200, ribs or grooves on the hood 218, and so forth. Then, the AI/machine learning algorithms may determine a distance between the location of the initial contact and the one or more reference features (e.g., via counting pixels in the images, wherein each pixel corresponds to a respective distance), and then refer to known positions of the one or more reference features relative to the pair of deck plates 212 to determine the location of the initial contact along the pair of deck plates 212. In some cases, the one or more reference features may include mechanical components that provide mechanical functionality (e.g., bolts for coupling, durability, and structural support during harvesting operations) on the header 200. However, it should be appreciated that the one or more reference features may include design features that does not provide mechanical functionality, such as a cover, non-structural grooves, and so forth.

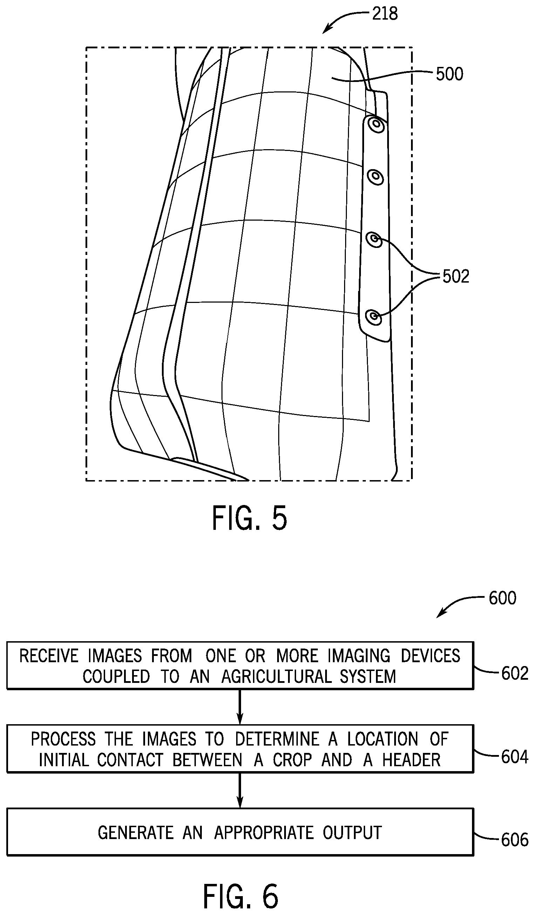

For example, FIG. 5 is a perspective side view of an embodiment of the hood 218 that may be employed within the header 200 of FIG. 2. As shown, the hood 218 has a cover 500 (e.g., sheet that is adhered to an upper surface of the hood 218; paint applied to the upper surface of the hood 218), which may be a patterned cover (e.g., a cover with a pattern). In FIG. 5, the pattern includes a uniform pattern (e.g., checkerboard pattern) with distinct sections of colors (e.g., black and white; sections of known position and size). Additionally or alternatively, the hood 218 may include one or more bolts 502 that couple the hood 218 to a row unit frame of a row unit. As shown, the one or more bolts 502 may include multiple bolts distributed along the longitudinal axis of the header. However, it should be appreciated that the hood 218, the cover 500, and/or the one or more bolts 502 may have any of a variety of characteristics and/or configurations to facilitate the computer vision techniques disclosed herein.

With reference to FIG. 4, the impact sensor system includes the controller 610 with a processor 612 and a memory device 614. The controller 610 is communicatively coupled to the one or more imaging devices 230 and/or the one or more sensors 410 (when the one or more sensor 410 are present). The controller 610 receives and processes the images from the one or more imaging devices 230 and/or the signals from the one or more sensors 410 (e.g., using one or more algorithms, including AI/machine learning algorithms) to determine the location of the initial contact of the desirable crop material on the header 200, and then the controller 610 generates the appropriate output. As noted herein, the appropriate output may include the visual alarm and/or the audible alarm. In some embodiments, the appropriate output may include control signals, such as control signals to the actuators to adjust the position and/or the spatial orientation of the header 200 and/or a rotation rate of the pair of stalk rollers.

In some embodiments, the controller 610 may not provide the alarm(s) and/or the control signals for each occurrence of the location being outside of a target impact region, but instead may record or track each occurrence and trigger the alarm(s) and/or the control signals in response to some percentage of the crops over some period of time striking outside of the target impact region, or in response to the combined impact location being outside of the target impact region. Further, it should be appreciated that the controller 610 may also receive and account for other inputs (e.g., detected loose or flying kernels, detected stalks at the rear end of the pair of deck plates) to provide the alarm(s) and/or to automatically, dynamically provide the control signals (e.g., with an aim to optimize; increase production rates and/or yield of the crop) the harvesting operations. For example, in some embodiments, the controller 610 may not provide the alarm(s) and/or the control signals if the initial contact of the crop occurs outside of the target impact region, but the other inputs indicate that the harvesting operations are proceeding appropriately (e.g., minimal loose or flying kernels and minimal detected stalks at the rear end of the pair of deck plates).

The processor 612 may be used to execute software, such as software for processing signals, controlling the agricultural system, and/or controlling the header 200. Moreover, the processor 612 may include multiple microprocessors, one or more "general-purpose" microprocessors, one or more special-purpose microprocessors, and/or one or more application specific integrated circuits (ASICS), or some combination thereof. For example, the processor 612 may include one or more reduced instruction set (RISC) or complex instruction set (CISC) processors. The memory device 614 may include a volatile memory, such as random access memory (RAM), and/or a nonvolatile memory, such as read-only memory (ROM). The memory device 614 may store a variety of information and may be used for various purposes. For example, the memory device 614 may store processor-executable instructions (e.g., firmware or software) for the processor 612 to execute, such as instructions for processing signals, controlling the agricultural system, and/or controlling the header 200. The processor 612 may include multiple processors and/or the memory device 614 may include multiple memory devices. The processor 612 and/or the memory device 614, or the multiple processors and/or the multiple memory devices, may be located in any suitable portion of the agricultural system (e.g., the cab of the agricultural system and/or on the header 200). Further, the controller 610 may be a distributed controller with the multiple processors and/or the multiple memory devices in separate housings or locations (e.g., in the agricultural system, in the header 200, remote, in the cloud).

FIG. 6 is a flowchart of an embodiment of a method 600 for determining an impact location on a header, such as the header of FIG. 2. The method 600 may be performed via the controller disclosed herein, or another suitable device. Further, the method 600 may be performed differently in additional or alternative embodiments. For instance, additional steps may be performed with respect to the method 600, and/or certain steps of the method 600 may be modified, removed, performed in a different order, or a combination thereof. The method 600 may be performed based on the images received from the one or more imaging devices of FIGS. 1-4 and/or based on other types of data (e.g., vibrations, detected loose or flying kernels, detected stalks at the rear end of the pair of deck plates).

At block 602, the controller may receive images from one or more imaging devices coupled to an agricultural system, such as to a header of the agricultural system. In some embodiments, the one or more imaging devices may include multiple imaging devices distributed across a width of the header. During harvesting operations, the crop (e.g., the portion of the crop; the desirable crop material; ears of corn) may strike and make initial contact with one or more deck plates at a location (e.g., impact location) along the one or more deck plates. The images may include frame(s) that show the initial contact.

At block 604, the controller may process the images to determine the location of the initial contact between the crop and the header, such as the deck plates of the header. The controller may utilize computer vision techniques, including AI/machine learning algorithms, to process the images to determine the location of the initial contact between the crop and the header. The computer vision techniques may identify the location of the crop as the crop strikes the header (e.g., no space between the crop and deck plates of the header; change in velocity and/or direction of the crop).

At block 606, the controller may generate an appropriate output. In some embodiments, the appropriate output may include a visual alarm and/or an audible alarm. In some embodiments, the appropriate output may include control signals, such as control signals to the actuators to adjust the position and/or the spatial orientation of the header and/or a rotation rate of the pair of stalk rollers. For example, in response to and/or based on the location of the initial contact being rearward of a target impact region, the controller may instruct output of the visual alarm and/or the audible alarm, raise the header relative to the chassis of the agricultural system and the ground, and/or reduce an angle between the header and the ground. In some embodiments, the controller may provide the control signals to manipulate the actuators based on the location of the initial contact, but also accounting for other operational features (e.g., detected loose or flying kernels, detected stalks at the rear end of the one or more deck plates) to essentially optimize (e.g., aim to optimize; increase production rates and/or yield of the crop) the harvesting operations. The controller may repeat the method 600 as the agricultural system harvests crops in a field. As noted herein, the controller may also consider other information, including timing information derived from signals generated by one or more sensors (e.g., knock sensors, vibration sensors) on the header to analyze the images (e.g., to identify relevant frame(s) in the images).

While only certain features of the disclosure have been illustrated and described herein, many modifications and changes will occur to those skilled in the art.

## Claims

1. An impact detection system for a header (200) of an agricultural system (100), wherein the impact detection system comprises:
a first camera (230) coupled to the agricultural system (100) and configured to capture imagery of at least one row unit (204) of the header (200); and
a controller (610) configured to utilize computer vision techniques to:
identify a portion of a crop in the imagery;
**characterized in that** the controller is further configured to determine a location of initial contact of the portion of the crop at the header (200) based on the imagery.

2. The impact detection system of claim 1, wherein the portion of the crop comprises an ear of corn.

3. The impact detection system of any of claims 1 to 2, wherein the first camera (230) is coupled to the header (200) or to a cab portion (120) of the agricultural system (100).

4. The impact detection system of any of claims 1 to 3, comprising a second camera (230) coupled to the agricultural system (100) and configured to capture additional imagery of at least one additional row unit (204) of the header (200), wherein the controller (610) is configured to utilize computer vision techniques to:
identify an additional portion of an additional crop in the additional imagery; and
determine an additional location of respective initial contact of the additional portion of the additional crop at the header (200) based on the additional imagery.

5. The impact detection system of any of claims 1 to 4, wherein the controller (610) is configured to utilize computer vision techniques to:
identify additional portions of additional crops in the imagery over a period of time; and
determine additional locations of respective initial contacts of the additional portions of the additional crops at to the header (200) based on the imagery over the period of time; and
calculate a combined impact location based on an average or a median of the location of the initial contact of the portion of the crop at the header (200) and the additional locations of the respective initial contacts of the additional portions of the additional crops at the header (200).

6. The impact detection system of claim 5, wherein the controller (610) is configured to provide an appropriate output in response to the combined impact location being outside of a target impact region, and the appropriate output comprises one or more alarms, one or more control signals to adjust the header (200), or both.

7. The impact detection system of any of claims 1 to 6, comprising a sensor (410) configured to generate a signal indicative of vibrations due to the initial contact of the portion of the crop at the header (200).

8. The impact detection system of claim 7, wherein the controller (610) is configured to:
determine a time of the initial contact of the portion of the crop at the header (200) based on the signal;
identify one or more frames in the imagery that correspond to the time; and
utilize the computer vision techniques to:
identify the portion of the crop in the one or more frames in the imagery; and
determine the location of the initial contact of the portion of the crop at the header (200) based on the one or more frames in the imagery.

9. The impact detection system of any of claims 7 to 8, wherein the computer vision techniques comprise machine learning algorithms, and the signal is utilized as feedback training data to train the machine learning algorithms to determine the location of the initial contact of the portion of the crop at the header (200) based on the one or more frames in the imagery.

10. The impact detection system of any of claims 1 to 8, wherein the computer vision techniques comprise machine learning algorithms.

11. The impact detection system of any of claims 1 to 10, wherein the controller (610) is configured to utilize the computer vision techniques to identify a reference feature on the header (200), and to determine the location of the initial contact of the portion of the crop at the header (200) based on the reference feature on the header (200).

12. The impact detection system of claim 11, wherein the reference feature comprises a patterned cover (500) on a hood (218) positioned between adjacent row units of the header (200).

13. The impact detection system of claim 11, wherein the reference feature comprises one or more bolts (502), one or more grooves, a cover (500), or any combination thereof.

14. A method, comprising:
operating a header (200) to harvest a plurality of crops as the header (200) travels through a field;
generating, via a first camera (230), imagery of at least one row unit (204) of the header (200); and
processing, via one or more processors (612), the imagery to identify a respective portion of each crop of the plurality of crops received at the at least one row unit (204) of the header (200); **characterized by**
processing, via the one or more processors (612), the imagery to determine a respective location of initial contact between the respective portion of each crop of the plurality of crops received at the at least one row unit (204) of the header (200) and deck plates (212) of the header (200).

15. The method of claim14, comprising processing, via the one or more processors (612) and using computer vision techniques, the imagery to identify the respective portion of each crop of the plurality of crops received at the at least one row unit (204) of the header (200) and to determine the respective location of the initial contact between the respective portion of each crop of the plurality of crops received at the at least one row unit (204) of the header (200) and the deck plates (212) of the header (200).

## Patentansprüche

1. Auftrefferkennungssystem für einen Erntevorsatz (200) eines landwirtschaftlichen Systems (100), wobei das Auftrefferkennungssystem umfasst:
eine erste Kamera (230), die mit dem landwirtschaftlichen System (100) gekoppelt ist und dazu eingerichtet ist, Bilder von mindestens einer Reiheneinheit (204) des Erntevorsatzes (200) zu erfassen; und
eine Steuereinrichtung (610), die dazu eingerichtet ist, Computer-Vision-Techniken zu verwenden, um:
einen Teil eines Ernteguts in den Bildern zu identifizieren;
**dadurch gekennzeichnet, dass** die Steuereinrichtung ferner dazu eingerichtet ist,
einen Ort des Erstkontakts des Teils des Ernteguts mit dem Erntevorsatz (200) basierend auf den Bildern zu bestimmen.

2. Auftrefferkennungssystem nach Anspruch 1, wobei der Teil des Ernteguts einen Maiskolben umfasst.

3. Auftrefferkennungssystem nach einem der Ansprüche 1 bis 2, wobei die erste Kamera (230) mit dem Erntevorsatz (200) oder mit einem Kabinenteil (120) des landwirtschaftlichen Systems (100) gekoppelt ist.

4. Auftrefferkennungssystem nach einem der Ansprüche 1 bis 3, umfassend eine zweite Kamera (230), die mit dem landwirtschaftlichen System (100) gekoppelt ist und dazu eingerichtet ist, zusätzliche Bilder von mindestens einer zusätzlichen Reiheneinheit (204) des Erntevorsatzes (200) zu erfassen, wobei die Steuereinrichtung (610) dazu eingerichtet ist, Computer-Vision-Techniken zu verwenden, um:
einen zusätzlichen Teil eines zusätzlichen Ernteguts in den zusätzlichen Bildern zu identifizieren; und
einen zusätzlichen Ort eines jeweiligen Erstkontakts des zusätzlichen Teils des zusätzlichen Ernteguts mit dem Erntevorsatz (200) basierend auf den zusätzlichen Bildern zu bestimmen.

5. Auftrefferkennungssystem nach einem der Ansprüche 1 bis 4, wobei die Steuereinrichtung (610) dazu eingerichtet ist, Computer-Vision-Techniken zu verwenden, um:
zusätzliche Teile zusätzlichen Ernteguts in den Bildern über einen Zeitraum zu identifizieren; und
zusätzliche Orte jeweiliger Erstkontakte der zusätzlichen Teile des zusätzlichen Ernteguts mit dem Erntevorsatz (200) basierend auf den Bildern über den Zeitraum zu bestimmen; und
einen kombinierten Auftreffort basierend auf einem Durchschnitt oder einem Median des Ortes des Erstkontakts des Teils des Ernteguts mit dem Erntevorsatz (200) und den zusätzlichen Orten der jeweiligen Erstkontakte der zusätzlichen Teile des zusätzlichen Ernteguts mit dem Erntevorsatz (200) zu berechnen.

6. Auftrefferkennungssystem nach Anspruch 5, wobei die Steuereinrichtung (610) dazu eingerichtet ist, eine geeignete Ausgabe bereitzustellen, wenn der kombinierte Auftreffort außerhalb eines Zielauftreffbereichs liegt, und wobei die geeignete Ausgabe einen oder mehrere Alarme, ein oder mehrere Steuersignale zur Anpassung des Erntevorsatzes (200), oder beides umfasst.

7. Auftrefferkennungssystem nach einem der Ansprüche 1 bis 6, umfassend einen Sensor (410), der dazu eingerichtet ist, ein Signal zu erzeugen, das kennzeichnend ist für Vibrationen aufgrund des Erstkontakts des Teils des Ernteguts mit dem Erntevorsatz (200).

8. Auftrefferkennungssystem nach Anspruch 7, wobei die Steuereinrichtung (610) dazu eingerichtet ist:
eine Zeit des Erstkontakts des Teils des Ernteguts mit dem Erntevorsatz (200) basierend auf dem Signal zu bestimmen;
ein oder mehrere Einzelbilder in den Bildern zu identifizieren, die der Zeit entsprechen; und
die Computer-Vision-Techniken zu verwenden, um:
den Teil des Ernteguts in dem einen oder den mehreren Einzelbildern der Bilder zu identifizieren; und
den Ort des Erstkontakts des Teils des Ernteguts mit dem Erntevorsatz (200) basierend auf dem einen oder den mehreren Einzelbildern der Bilder zu bestimmen.

9. Auftrefferkennungssystem nach einem der Ansprüche 7 bis 8, wobei die Computer-Vision-Techniken Machine-Learning-Algorithmen umfassen und das Signal als Feedback-Trainingsdaten verwendet wird, um die Machine-Learning-Algorithmen zu trainieren, den Ort des Erstkontakts des Teils des Ernteguts am Erntevorsatz (200) basierend auf dem einen oder den mehreren Frames der Bilderfassung zu bestimmen.

10. Auftrefferkennungssystem nach einem der Ansprüche 1 bis 8, wobei die Computer-Vision-Techniken Maschinenlernalgorithmen umfassen.

11. Auftrefferkennungssystem nach einem der Ansprüche 1 bis 10, wobei die Steuereinrichtung (610) dazu eingerichtet ist, die Computer-Vision-Techniken zu verwenden, um ein Referenzmerkmal am Erntevorsatz (200) zu identifizieren und den Ort des Erstkontakts des Teils des Ernteguts mit dem Erntevorsatz (200) basierend auf dem Referenzmerkmal am Erntevorsatz (200) zu bestimmen.

12. Auftrefferkennungssystem nach Anspruch 11, wobei das Referenzmerkmal eine gemusterte Abdeckung (500) an einer Haube (218) umfasst, die zwischen benachbarten Reiheneinheiten des Erntevorsatzes (200) angeordnet ist.

13. Auftrefferkennungssystem nach Anspruch 11, wobei das Referenzmerkmal einen oder mehrere Bolzen (502), eine oder mehrere Nuten, eine Abdeckung (500) oder eine beliebige Kombination davon umfasst.

14. Verfahren, umfassend:
Betreiben eines Erntevorsatzes (200) zum Ernten einer Mehrzahl von Erntegütern, während sich der Erntevorsatz (200) über ein Feld bewegt;
Erzeugen von Bildern von mindestens einer Reiheneinheit (204) des Erntevorsatzes (200) mittels einer ersten Kamera (230); und
Verarbeiten, mittels eines oder mehrerer Prozessoren (612), der Bilder, um einen jeweiligen Teil jedes Ernteguts der Mehrzahl von Erntegütern, die an der mindestens einen Reiheneinheit (204) des Erntevorsatzes (200) aufgenommen werden, zu identifizieren; **gekennzeichnet durch**
Verarbeiten, mittels des einen oder der mehreren Prozessoren (612), der Bilder, um einen jeweiligen Ort des Erstkontakts zwischen dem jeweiligen Teil jedes Ernteguts der Mehrzahl von Erntegütern, die an der mindestens einen Reiheneinheit (204) des Erntevorsatzes (200) aufgenommen werden, mit Deckplatten (212) des Erntevorsatzes (200) zu bestimmen.

15. Verfahren nach Anspruch 14, umfassend das Verarbeiten, mittels des einen oder der mehreren Prozessoren (612) und unter Verwendung von Computer-Vision-Techniken, der Bilder, um den jeweiligen Teil jedes Ernteguts der Mehrzahl von Erntegütern, die an der mindestens einen Reiheneinheit (204) des Erntevorsatzes (200) aufgenommen werden, zu identifizieren und den jeweiligen Ort des Erstkontakts zwischen dem jeweiligen Teil jedes Ernteguts der Mehrzahl von Erntegütern, die an der mindestens einen Reiheneinheit (204) des Erntevorsatzes (200) aufgenommen werden, mit den Deckplatten (212) des Erntevorsatzes (200) zu bestimmen.

## Revendications

1. Un système de détection d'impact pour un organe de coupe (200) d'un système agricole (100), dans lequel le système de détection d'impact comprend :
une première caméra (230) couplée au système agricole (100) et configurée pour collecter l'imagerie d'au moins une unité de rang (204) de l'organe de coupe (200) ; et
un dispositif de commande (610) configuré pour utiliser des techniques de vision par ordinateur afin :
d'identifier une partie d'une récolte dans l'imagerie ;
**caractérisé en ce que** le dispositif de commande est en outre configuré pour
déterminer un emplacement de contact initial de la partie de la récolte au niveau de l'organe de coupe (200) en fonction de l'imagerie.

2. Le système de détection d'impact selon la revendication 1, dans lequel la partie de la récolte comprend un épi de maïs.

3. Le système de détection d'impact selon l'une quelconque des revendications 1 à 2, dans lequel la première caméra (230) est couplée à l'organe de coupe (200) ou à une partie de cabine (120) du système agricole (100).

4. Le système de détection d'impact selon l'une quelconque des revendications 1 à 3, comprenant une seconde caméra (230) couplée au système agricole (100) et configurée pour collecter une imagerie supplémentaire d'au moins une unité de rang supplémentaire (204) de l'organe de coupe (200), dans lequel le dispositif de commande (610) est configuré pour utiliser des techniques de vision par ordinateur afin :
d'identifier une partie supplémentaire d'une récolte supplémentaire dans l'imagerie supplémentaire ; et
de déterminer un emplacement supplémentaire de contact initial respectif de la partie supplémentaire de la récolte supplémentaire au niveau de l'organe de coupe (200) en fonction de l'imagerie supplémentaire.

5. Le système de détection d'impact selon l'une quelconque des revendications 1 à 4, dans lequel le contrôleur (610) est configuré pour utiliser des techniques de vision par ordinateur afin :
d'identifier des parties supplémentaires de récoltes supplémentaires dans l'imagerie sur une période de temps ; et
de déterminer des emplacements supplémentaires des contacts initiaux respectifs des parties supplémentaires des récoltes supplémentaires au niveau de l'organe de coupe (200) en fonction de l'imagerie sur la période de temps ; et
de calculer un emplacement d'impact combiné en fonction d'une moyenne ou d'une médiane de l'emplacement du contact initial de la partie de la récolte au niveau de l'organe de coupe (200) et des emplacements supplémentaires des contacts initiaux respectifs des parties supplémentaires des récoltes supplémentaires au niveau de l'organe de coupe (200).

6. Le système de détection d'impact selon la revendication 5, dans lequel le dispositif de commande (610) est configuré pour fournir une sortie appropriée en réponse au fait que l'emplacement d'impact combiné se trouve en dehors d'une région d'impact cible, et la sortie appropriée comprend une ou plusieurs alarmes, un ou plusieurs signaux de commande pour ajuster l'organe de coupe (200), ou les deux.

7. Le système de détection d'impact selon l'une quelconque des revendications 1 à 6, comprenant un capteur (410) configuré pour générer un signal indicatif des vibrations dues au contact initial de la partie de la récolte au niveau de l'organe de coupe (200).

8. Le système de détection d'impact selon la revendication 7, dans lequel le contrôleur (610) est configuré pour :
déterminer un moment du contact initial de la partie de la récolte au niveau de l'organe de coupe (200) en fonction du signal ;
identifier une ou plusieurs images dans l'imagerie qui correspondent à ce moment ; et
utiliser les techniques de vision par ordinateur pour :
identifier la partie de la récolte dans une ou plusieurs images dans l'imagerie ; et
déterminer l'emplacement du premier contact de la partie de la récolte au niveau de l'organe de coupe (200) en fonction d'une ou de plusieurs images dans l'imagerie.

9. Le système de détection d'impact selon l'une quelconque des revendications 7 à 8, dans lequel les techniques de vision par ordinateur comprennent des algorithmes d'apprentissage automatique, et le signal est utilisé comme données d'entraînement de retour pour entraîner les algorithmes d'apprentissage automatique à déterminer l'emplacement du contact initial de la partie de la récolte au niveau de l'organe de coupe (200) en fonction d'une ou de plusieurs images dans l'imagerie.

10. Le système de détection d'impact selon l'une quelconque des revendications 1 à 8, dans lequel les techniques de vision par ordinateur comprennent des algorithmes d'apprentissage automatique.

11. Le système de détection d'impact selon l'une quelconque des revendications 1 à 10, dans lequel le dispositif de commande (610) est configuré pour utiliser les techniques de vision par ordinateur afin d'identifier une caractéristique de référence au niveau de l'organe de coupe (200) et de déterminer l'emplacement du contact initial de la partie de la récolte au niveau de l'organe de coupe (200) en fonction de la caractéristique de référence au niveau de l'organe de coupe (200).

12. Le système de détection d'impact selon la revendication 11, dans lequel la caractéristique de référence comprend un couvercle à motifs (500) sur un capot (218) positionné entre des unités de rang adjacentes de l'organe de coupe (200).

13. Le système de détection d'impact selon la revendication 11, dans lequel la caractéristique de référence comprend un ou plusieurs boulons (502), une ou plusieurs rainures, un couvercle (500) ou toute combinaison de ces éléments.

14. Un procédé comprenant :
le fonctionnement d'un organe de coupe (200) pour moissonner une pluralité de récoltes alors que l'organe de coupe (200) se déplace dans un champ ;
la génération, par l'intermédiaire d'une première caméra (230), d'une imagerie d'au moins une unité de rang (204) de l'organe de coupe (200) ; et
le traitement, par l'intermédiaire d'un ou de plusieurs processeurs (612), de l'imagerie afin d'identifier une partie respective de chaque récolte parmi la pluralité de récoltes reçues au niveau de l'au moins une unité de rang (204) de l'organe de coupe (200) ; **caractérisé par**
le traitement, par l'intermédiaire du ou des processeurs (612), de l'imagerie afin de déterminer un emplacement respectif de contact initial entre la partie respective de chaque récolte parmi la pluralité de récoltes reçues au niveau de l'au moins une unité de rang (204) de l'organe de coupe (200) et les plaques de tablier (212) de l'organe de coupe (200).

15. Le procédé selon la revendication 14, comprenant le traitement, par l'intermédiaire d'un ou de plusieurs processeurs (612) et utilisant des techniques de vision par ordinateur, l'imagerie afin d'identifier la partie respective de chaque récolte parmi la pluralité de récoltes reçues au niveau de l'au moins une unité de rang (204) de l'organe de coupe (200) et de déterminer l'emplacement respectif du contact initial entre la partie respective de chaque récolte parmi la pluralité de récoltes reçues au niveau de l'au moins une unité de rang (204) de l'organe de coupe (200) et les plaques de tablier (212) de l'organe de coupe (200).
